# EUROPEAN PATENT SPECIFICATION

(11) **EP 2 129 714 B1**
(45) Date of publication and mention of the grant of the patent: **03.08.2011**
(21) Application number: 08744561.5
(22) Date of filing: 28.03.2008
(51) Int. Cl.: C08J 9/14

(54) **BLOWING AGENT COMPOSITION OF HYDROFLUOROPROPENE AND HYDROCHLOROFLUOROOLEFIN**
BLASMITTELZUSAMMENSETZUNG AUS HYDROFLUORPROPEN UND HYDROCHLORFLUOROLEFIN
COMPOSITION D'AGENT D'EXPANSION À BASE D'HYDROFLUOROPROPÈNE ET D'HYDROCHLOROFLUOROOLÉFINE

(30) Priority: 29.03.2007 US 908751 P
(43) Date of publication of application: 09.12.2009
(73) Proprietor: Arkema, Inc., Philadelphia, Pennsylvania 19103 (US)
(72) Inventor: CHEN, Benjamin B., Wayne, Pennsylvania 19087 (US); COSTA, Joseph S., Gilbertsville, Pennsylvania 19525 (US); VAN HORN, Brett L., King of Prussia, Pennsylvania 19406 (US); ELSHEIKH, Maher Y., Wayne, Pennsylvania 19087 (US); BONNET, Philippe, Lower Merion, Pennsylvania 19085 (US)
(74) Representative: Dang, Doris
(86) International application number: PCT/US2008/058604
(87) International publication number: WO 2008/121787

(56) References cited:
- WO-A2-2006/069362
- US-A- 6 013 846
- US-B2- 6 858 571

## Description

### FIELD OF THE INVENTION

The present invention relates to blowing agents for thermosetting foams. More particularly, the present invention relates to the use of the unsaturated halogenated hydroolefin, 3,3,3-trifluoropropene (HFO-1243zf or TFP) in combination with a hydrochlorofluoroolefin (HCFO) selected from HCFO-1233zd, HCFO-1233xf, HCFO-1223 and mixtures thereof as a blowing agent in the manufacture of thermosetting foams.

### BACKGROUND OF THE INVENTION

The Montreal Protocol for the protection of the ozone layer, signed in October 1987, mandated the phase out of the use of chlorofluorocarbons (CFCs). Materials more "friendly" to the ozone layer, such as hydrofluorocarbons (HFCs) eg HFC-134a replaced chlorofluorocarbons. The latter compounds have proven to be green house gases, causing global warming and were regulated by the Kyoto Protocol on Climate Change, signed in 1998. The emerging replacement materials, hydrofluoropropenes, were shown to be environmentally acceptable ie has zero ozone depletion potential (ODP) and acceptable low GWP.

Currently used blowing agents for thermoset foams include HFC-134a, HFC-245fa, HFC-365mfc that have relatively high global warming potential, and hydrocarbons such as pentane isomers flammable and have low energy efficiency. Therefore, new alternative blowing agents are being sought. Halogenated hydroolefinic materials such as hydrofluoropropenes and/or hydrochlorofluoropropenes have generated interest as replacements for HFCs. The inherent chemical instability of these materials in the lower atmosphere provides the low global warning potential and zero or near zero ozone depletion properties desired.

US Pat. 5,205,956 discloses the use of vinyl fluoroalkanes of the formula CH₂=CH-Cₙ-F₍₂ₙ₊₁₎, where n is an integer from 1 to 6, in blowing agent formulations to replace CFC-11 and/or CFC-12. For replacement of CFC-11 and CFC-113, n is preferably from 3 to 6, and for replacement of CFC-12 n is preferably from 1 to 3. The examples disclose longer, higher boiling vinyl fluoroalkanes, including vinyl perfluoro-n-butane and vinyl perfluoro-n-hexane, in blowing agent formulations for polyurethane foaming.

US Pat. 4,085,073 discloses blowing agent compositions containing chlorofluoromethane, bromochlorodifluoromethane, and mixtures thereof, alone or with minor amounts of other halogen containing carbon compounds as blowing agents. The patent mentions TFP, along with a list of other halogenated compounds as possible diluents.

GB 950,876 discloses a process for the production of polyurethane foams. It describes that any suitable halogenated saturated or unsaturated hydrocarbon having a boiling point below 150°C, preferably below 50°C, can be used as the blowing agent. TFP is among the halogenated hydrocarbons listed however the examples all employ CFC-11 as the blowing agent.

US Pat. 6,858,571 and WO 2004/037742 disclose azeotrope-like compositions that contain pentafluoropropene (HFO-1225) and a second fluid from the group consisting of 3,3,3-trifluoropropene ("HFO-1243zf"), 1,1-difluoroethane ("HFC-152a"), trans-1,3,3,3-tetrafluoropropene ("HFO-1234ze"), and combinations of two or more thereof. The use of these azeeotropes as blowing agents is mentioned.

WO 2004/037913 and US Pat. Publication 2004119047 disclose a generic formula for HFOs that includes TFP but teach that fluoropropenes containing additional fluorine are preferred, specifically tetrafluoropropenes and pentafluoropropenes, and even more preferred are HFO-1234ze, HFO-1234yf, and HFO-1225ye, and any stereo isomers thereof. There is no disclosure of any advantages of using TFP.

US Pat. Publication 2006243944 discloses numerous compositions comprising combinations of materials which include a combination of TFP and at least one other compound selected from a specific list including numerous HFCs and hydrocarbons. The combinations are described as being useful for a variety of uses including use as blowing agents.

The object of the present invention is to provide novel compositions that can serve as blowing agents for thermosetting foams that provide unique characteristics to meet the demands of low or zero ozone depletion potential, lower global warming potential and exhibit low tonicity.

### SUMMARY OF THE INVENTION

The present invention relates to the use of blowing agents with negligible (low or zero) ozone-depletion and low GWP based upon unsaturated halogenated hydroolefins. The blowing agents comprise the hydrofluoropropene HFO-1243zf (3,3,3-trifluoropropene) in a combination with a hydrochlorofluoroolefin (HCFO) selected from HCFO-1233zd (1-chlor-3,3,3-trifluoropropene), HCFO-12-33xf (2-chloro-3,3,3-trifluoropropene), HFO-1223 (dichlorotrifluoropropene) and mixtures thereof. The composition can further comprises a second, different hydrofluoroolefin (HFO), a hydrofluorocarbon, a hydrocarbon, an alcohol, an aldehyde, an ester, a ketone ether/diether or carbon dioxide.

The HFO-1243zf in combination with a hydrochlorofluoroolefin (HCFO) selected from HCFO-1233zd, HCFO-1233xf, HCFO-1223 and mixtures thereof combination can be used as a foaming agent for thermosetting foams by being mixed in a polyols mixture. The resulted products show superior quality including decreased density and improved k-factor. The foaming agent readily dissolves in thermosetting polymers, and provides a degree of plasticization sufficient to produce acceptable foams.

The preferred blowing agent composition, HFQ-1243zf in combination with a hydrochlorofluoroolefin (HCFO) selected from HCFO-1233zd, HCFO-1233xf, HCFO-1223 and mixtures thereof of the present invention exhibits good solubility in polyol mixtures used in producing polyurethane and polyisocyanurate foams. A preferred ratio of the HFO-1243zf component in combination with a hydrochlorofluoroolefin (HFO) selected from HCFO-1233zd, HCFO-1233xf, HCFO-1223 and mixtures thereof is more than 5wt% HFO-1243zf.

The hydrofluoropropene HFO-1243zf in combination with a hydrochlorofluoroolefin (HCFO) selected from HCFO-1233zd, HCFO-1233xf, HCFO-1223 and mixtures thereof composition of the present invention may be used in combination with additional low global warming potential and low or zero ozone depletion value materials including but not limited to: (a) hydro fluorocarbons including but not limited to difluoromethane (HFC32), 1,1,1-trifluoroethane (143a), 1,1,1,2,2-pentafluoroethane (HFC125), 1,1,2,2-tetrafluorothane (HFC134), 1,1,1,2-tetrafluoroethane (HFC134a), 1,1-difluoroethane (HFC152a), 1,1,1,2,3,3,3-heptafluoropropane (HFC227ea), 1,1,1,3,3-pentafluopropane (HFC245fa), 1,1,1,3,3-pentafluobutane (HFC365mfc)and 1,1,1,2,2,3,4,5,5,5-decafluoropentane (HFC4310mee). (b) hydrofluoroolefins including but not limited to tetrafluoropropene (HFO1234), all tetrafluorobutene isomers (HFO1354), all pentafluorobutene isomers (HF01345), all hexafluorobutene isomers (HFO1336 all heptafluorobutene isomers (HFO1327), all heptafluoropentene isomers (HFO1447) all octafluoropentene isomers (HFO 1438), all nonafluoropentene isomers (HFO 1429) (c) hydrocarbons including but not limited to, pentane isomers, butane isomers, (d) C1 to C5 alcohols, C 1 to C4 aldehydes, C1 to C4 ketones, C1 to C4 esters, C1 to C4 ethers and diethers and carbon dioxide.

The foamable compositions of the present invention generally include one or more components capable of forming foam having a generally cellular structure and a blowing agent, typically in a combination, in accordance with the present invention. In certain embodiments, the one or more components comprise a thermosetting composition capable of forming foam and/or foamable compositions. Examples of thermosetting compositions include polyurethane and polyisocyanurate foam compositions, and also phenolic foam compositions. In such thermosetting foam embodiments, one or more of the present compositions are included as or part of a blowing agent in a foamable composition, or as a part of a two or more part foamable composition, which preferably includes one or more of the components capable of reacting and/or foaming under the proper conditions to form a foam or cellular structure.

The invention also relates to foam, and preferably closed cell foam, prepared from a polymer foam formulation containing a blowing agent comprising the compositions of the invention. In yet other embodiments, the invention provides foamable compositions comprising thermosetting foams, such as polyurethane and polyisocyanurate foams, preferably low-density foams, flexible or rigid.

It will be appreciated by those skilled in the art that the order and manner in which the blowing agent combination of the present invention is formed and/or added to the foamable composition does not generally affect the operability of the present invention. For example, in the case of polyurethane foams, it is possible that the various components of the blowing agent combination, and even the components of the present composition, not be mixed in advance of introduction to the foaming equipment, or even that the components are not added to the same location in the foaming equipment. Thus, in certain embodiments it may be desired to introduce one or more components of the blowing agent combination in a blender with the expectation that the components will come together in the foaming equipment and/or operate more effectively in this manner. Nevertheless, in certain embodiments, two or more components of the blowing agent combination are combined in advance and introduced together into the foamable composition, either directly or as part of premix that is then further added to other parts of the foamable composition.

### EXAMPLES

### Example 1

In the following examples, the foam was made by small polyurethane dispenser unless otherwise specified. The dispenser consisted of two pressurized cylinders, one for the A side (MDI) and one for the B side (polyol mixtures). The pressure in the cylinders could be adjusted by regulators. B-side mixtures were pre-blended and then charged into pressurized cylinders. Blowing agents were then added into B-side cylinder and mixed thoroughly. The cylinders were connected to a dispensing gun equipped with a static mixer. The pressures of both cylinders were adjusted so that desired ratio of the A and B sides could be achieved. The formulations tested (all had an Iso Index on ROH of 110) each contained Rubinate M, a polymeric methylene diphenyl diisocyanate (MDI) available from Huntsman; Jeffol SG-360 and R-425-X, polyols from Huntsman; TEAP-265, a polyol from Carpenter Company. TegostabB 8465 a surfactant available from Evonik-Degussa. Jeffcat TD33A and ZR-70 are catalysts from Huntsman. NP 9.5, a compatibilizer from Huntsman. Total blowing agent level was 26.0mls/g. Table 1 summarizes the formulations of the study.

**Table 1 Formulations**

| | HFO1243zf | HFO1233zd | HFO1234ze | HFO1243zf+HCFO1233zd |
|---|---|---|---|---|
| Jeffol SG-360 | 15.45 | 14.77 | 14.93 | 15.35 |
| Jeffol R-425-X | 4.41 | 4.22 | 4.27 | 4.39 |
| TEAP-265 | 8.83 | 8.44 | 8.53 | 8.77 |
| DEG | 2.21 | 2.11 | 2.13 | 2.19 |
| Jeffcat TD33A | 0.23 | 0.23 | 0.23 | 0.23 |
| Jeffcat ZR70 | 0.23 | 0,23 | 0.23 | 0.23 |
| Tegostab B8465 | 0.90 | 0.90 | 0.89 | 0.90 |
| NP 9.5 | 6.50 | 6.50 | 6.43 | 6.50 |
| Water | 0.42 | 0.42 | 0.41 | 0.42 |
| HFO 1243zf | 8.92 0 | 0 | 0 | 7.54 |
| HFO1234ze | 0 | 0 | 11.56 | 0 |
| HCFO1233zd | 0 | 12.11 | 0 | 1.89 |
| HFC 134a | 0 | 0 | 0 | 0 |
| Rubinate M | 51.9 | 50.1 | 50.4 | 51.6 |
| A side/B side | 1.08 | 1.00 | 1.02 | 1.07 |

### Example 2

Table 2 summarized B-side vapor pressure of different blowing agents.

**Table 2 B-side vapor pressure**

| Blowing agent | B-side Vapor pressure (KPa) | (psig) |
|---|---|---|
| HFO1243zf | 91.7 | (133) |
| HCFO1233zd | 0 | (0) |
| HFO 1234ze | 303 | (44) |
| HFO 1243zf+HCFO1233zd | 579,2 | (84) |

The B-side vapor pressure decreased significantly as a small amount of HCFO1233zd (15.5 mol % of HCFO1233zd over total of HCFO1233zd and HFO 1234zf) was added.

### Example 3

**Table 3 K-factor**

| Temp. (°F) | HFO1243zf | HCFO1233zd | HFO1234zeHFO1243zf+HCFO1233zd | |
|---|---|---|---|---|
| 17.6 | 0.1267 | 0.1222 | 0.1337 | 0.1211 |
| 32.0 | 0.1324 | 0.1250 | 0.1373 | 0.1265 |
| 50.2 | 0.1401 | 0.1302 | 0.1430 | 0.1340 |
| 75.2 | 0.1521 | 0.1416 | 0.1542 | 0.1458 |
| 104.0 | 0.1659 | 0.1549 | 0.1677 | 0.1595 |

K-factor is a key parameter for thermal insulation of foam. The lower the k-factor, the better the thermal insulation. As shown in Table 3, with the addition of a small amount of HCFO1233zd (15.5 mol % of HCFO1233zd over total of HCF01233zd and HFO 1234zf), the k-factor is reduced. At low temperatures, the k-factor of the foam made of 15.5 mol % of HCFO1233zd and 84.5 mol % of HFO 1243ze is very close to or even better that the foam made of HCFO 1233zd alone. This is particularly useful for low temperature insulation of appliances.

### Example 4

**Table 4 Free Rise Density**

| Blowing agent | Free Rise Density (pcf) | kg/m³ |
|---|---|---|
| HFO1243zf | (2.06) | 33.0 |
| HCFO1233zd | (1.71) | 27.4 |
| HFO1234ze | (1.78) | 28.5 |
| HFO243zf+HCFO1233zd | (1.94) | 31.1 |

Table 4 shows the free rise density was reduced as a small amount of HCFO1233zd (15.5 mol % of HCFO1233zd over total of HCFO1243zd and HFO 1234zf) was added. The lower the free rise density, the higher the blowing efficiency that can bring processing benefits such as better flowability of foam precursor. Low free rise density results in lower fill weight and material savings.

## Claims

1. A polymer blowing agent composition for thermosetting foams comprising the hydrofluoropropene HFO-1243zf in combination with a hydrochlorofluoroolefin selected from the group consisting of HCFO-1233zd, HCFO-1233xf, HCFO-1223 and mixtures thereof.

2. The polymer blowing agent composition of claim 1 wherein said hydrofluoropropene HFO-1243zf comprise 5 wt% or more of the hydrofluoropropene and hydrochlorofluoroolefin composition.

3. The polymer blowing agent composition of claim 1, further comprising a hydroflouorcarbon.

4. The polymer blowing agent composition of claim 3 wherein said hydrofluorocarbon is selected from the group consisting of difluoromethane (HFC32); 1,1,1-trifluoroethane (HFC143a); 1,1,1,2,2-pentafluoroethane (HFC125); 1,1,2,2-tetrafluoroethane (HFC134); 1,1,1,2-tetrafluoroethane (HFC134a); 1,1-difluoroethane (HFC152a); 1,1,1,2,3,3,3-heptafluoropropane (HFC227ea); 1,1,1,3,3-pentafluoropropane (HFC245fa); 1,1,1,3,3-pentafluorobutane (HFC365mfc) and 1,1,1,2,2,3,4,5,5,5-decafluoropentane (HFC4310mee).

5. The polymer blowing agent composition of claim 1, further comprising a hydrofluoroolefin.

6. The polymer blowing agent composition of claim 5 wherein said hydrofluoroolefin is selected form the group consisting of tetrafluoropropenes (HFO1234), tetrafluorobutene isomers (HFO1354), pentafluorobutene isomers (HFO1345), hexafluorobutene isomers (HFO1336), heptafluorobutene isomers (HFO1327), heptafluoropentene isomers (HFO1447), octafluoropentene isomers (HFO 1438), nonafluoropentene (HFO1429).

7. The polymer blowing agent composition of claim 1, further comprising a component selected from the group consisting of a second hydrofluoroolefin (HFO), a hydrofluorocarbon, a hydrocarbon, an alcohol, an aldehyde, an ester, a ketone ether/diether or carbon dioxide.

8. A process of foaming a polyurethane foam comprising mixing polymer foam components with a foam blowing agent comprising the hydrofluoropropene HFO-1243zf in combination with a hydrochlorofluoroolefin (HCFO) selected from the group consisting of HCFO-1233zd, HCFO-1233xf, HCFO-1223 and mixtures thereof.

9. The process of 8 wherein said hydrofluoropropene HFO-1243zf comprises 5 wt% or more of the hydrofluoropropene and hydrochlorofluoroolefin composition.

10. The process of claim 8, wherein said foam blowing agent further comprising further comprising a hydrofluorocarbon.

11. The process of claim 10 wherein said hydrofluorocarbon is selected from the group consisting of difluoromethane (HFC32); 1,1,1,2,2-pentafluproethane (HFC125); 1,1,1-trifluoroethane (HFC143a); 1,1,2,2-tetrafluoroethane (HFC134); 1,1,1,2-tetrafluoroethane (HFC134a); 1,1-difluoroethane (HFC152a); 1,1,1,2,3,3,3-heptafluoropropane (HFC227ea); 1,1,1,3,3-pentafluoropropane (HFC245fa); 1,1,1,3,3-pentafluorobutane (HFC365mfc) and 1,1,1,2,2,3,4,5,5,5-decafluoropentane (HFC4310mee).

12. The process of claim 8, wherein said foam blowing agent further comprising a hydrofluoroolefin.

13. The process of claim 12 wherein said hydrofluoroolefin is selected form the group consisting of 1,1,1,2-tetrafluoropropenes (HFO1234), tetrafluorobutene isomers (HFO1354), pentafluorobutene isomers (HFO1345), hexafluorobutene isomers (HFO1336), heptafluorobutene isomers (HFO1327), heptafluoropentene isomers (HFO1447), octafluoropentene isomers (HFO 1438) and nonafluoropentene (HFO1429).

14. The process of claim 8 wherein said blowing agent further comprises a component selected from the group consisting or a second hydrofluoroolefin (HFO), a hydrofluorocarbon, a hydrocarbon, an alcohol, an aldehyde, an ester, a ketone ether/diether or carbon dioxide.

## Patentansprüche

1. Polymertreibmittelzusammensetzung für wärmehärtende Schaumstoffe, umfassend das Hydrofluorpropen HFO-1243zf in Kombination mit einem Hydrochlorfluorolefin aus der Gruppe bestehend aus HCFO-1233zd, HCFO-1233xf, HCFO-1223 und Mischungen davon.

2. Polymertreibmittelzusammensetzung nach Anspruch 1, wobei das Hydrofluorpropen HFO-1243zf 5 Gew.-% oder mehr der Hydrofluorpropen-Hydrochlorfluorolefin-Zusammensetzung ausmacht.

3. Polymertreibmittelzusammensetzung nach Anspruch 1, die ferner einen teilfluorierten Fluorkohlenwasserstoff umfaßt.

4. Polymertreibmittelzusammensetzung nach Anspruch 3, wobei der teilfluorierte Fluorkohlenwasserstoff aus der Gruppe bestehend aus Difluormethan (H-FKW 32); 1,1,1-Trifluorethan (H-FKW 143a); 1,1,1,2,2-Pentafluorethan (H-FKW 125); 1,1,2,2-Tetrafluorethan (H-FKW 134); 1,1,1,2-Tetrafluorethan (H-FKW 134a); 1,1-Difluorethan (H-FKW 152a); 1,1,1,2,3,3,3-Heptafluorpropan (H-FKW 227ea); 1,1,1,3,3-Pentafluorpropan (H-FKW 245fa); 1,1,1,3,3-Pentafluorbutan (H-FKW 365mfc) und 1,1,1,2,2,3,4,5,5,5-Decafluorpentan (H-FKW 4310mee) ausgewählt ist.

5. Polymertreibmittelzusammensetzung nach Anspruch 1, die ferner ein Hydrofluorolefin umfaßt.

6. Polymertreibmittelzusammensetzung nach Anspruch 5, wobei das Hydrofluorolefin aus der Gruppe bestehend aus Tetrafluorpropenen (HFO1234), Tetrafluorbutenisomeren (HFO1354), Pentafluorbutenisomeren (HFO1345), Hexafluorbutenisomeren (HFO1336), Heptafluorbutenisomeren (HFO1327), Heptafluorpentenisomeren (HFO1447), Octafluorpentenisomeren (HFO 1438) und Nonafluorpenten (HFO 1429) ausgewählt ist.

7. Polymertreibmittelzusammensetzung nach Anspruch 1, die ferner eine Komponente aus der Gruppe bestehend aus einem zweiten Hydrofluorolefin (HFO), einem teilfluorierten Fluorkohlenwasserstoff, einem Kohlenwasserstoff, einem Alkohol, einem Aldehyd, einem Ester, einem Keton, einem Ether/Diether oder Kohlendioxid umfaßt.

8. Verfahren zum Verschäumen eines Polyurethanschaumstoffs, bei dem man Polymerschaumstoffkomponenten mit einem Schaumstofftreibmittel, das das Hydrofluorpropen HFO-1243zf in Kombination mit einem Hydrochlorfluorolefin aus der Gruppe bestehend aus HCFO-1233zd, HCFO-1233xf, HCFO-1223 und Mischungen davon umfaßt, mischt.

9. Verfahren nach Anspruch 8, bei dem das Hydrofluorpropen HFO-1243zf 5 Gew.-% oder mehr der Hydrofluorpropen-Hydrochlorfluorolefin-Zusammensetzung ausmacht.

10. Verfahren nach Anspruch 8, bei dem das Schaumstofftreibmittel ferner einen teilfluorierten Fluorkohlenwasserstoff umfaßt.

11. Verfahren nach Anspruch 10, bei dem der teilfluorierte Fluorkohlenwasserstoff aus der Gruppe bestehend aus Difluormethan (H-FKW 32); 1,1,1,2,2-Pentafluorethan (H-FKW 125); 1,1,1-Trifluorethan (H-FKW 143a); 1,1,1,2-Tetrafluorethan (H-FKW 134a); 1,1-Difluorethan (H-FKW 152a); 1,1,1,2,3,3,3-Heptafluorpropan (H-FKW 227ea); 1,1,1,3,3-Pentafluorpropan (H-FKW 245fa); 1,1,1,3,3-Pentafluorbutan (H-FKW 365mfc) und 1,1,1,2,2,3,4,5,5,5-Decafluorpentan (H-FKW 4310mee) ausgewählt wird.

12. Verfahren nach Anspruch 8, bei dem das Schaumstofftreibmittel ferner ein Hydrofluorolefin umfaßt.

13. Verfahren nach Anspruch 12, bei dem das Hydrofluorolefin aus der Gruppe bestehend aus 1,1,1,2-Tetrafluorpropenen (HFO1234), Tetrafluorbutenisomeren (HFO1354), Pentafluorbutenisomeren (HFO1345), Hexafluorbutenisomeren (HFO1336), Heptafluorbutenisomeren (HFO1327), Heptafluorpentenisomeren (HFO1447), Octafluorpentenisomeren (HFO 1438) und Nonafluorpenten (HFO 1429) ausgewählt wird.

14. Verfahren nach Anspruch 8, bei dem das Schaumstofftreibmittel ferner eine Komponente aus der Gruppe bestehend aus einem zweiten Hydrofluorolefin (HFO), einem teilfluorierten Fluorkohlenwasserstoff, einem Kohlenwasserstoff, einem Alkohol, einem Aldehyd, einem Ester, einem Keton, einem Ether/Diether oder Kohlendioxid umfaßt.

## Revendications

1. Composition d'agent d'expansion de polymères pour des mousses thermodurcissables comprenant l'hydrofluoropropène HFO-1243zf en combinaison avec une hydrochlorofluorooléfine choisie dans le groupe constitué par HCFO-1233zd, HCFO-1233xf, HCFO-1223 et leurs mélanges.

2. Composition d'agent d'expansion de polymères selon la revendication 1 dans laquelle ledit hydrofluoropropène HFO-1243zf constitue 5 % en poids ou plus de la composition d'hydrofluoropropène et d'hydrochlorofluorooléfine.

3. Composition d'agent d'expansion de polymères selon la revendication 1, comprenant en outre un hydrofluorocarbure.

4. Composition d'agent d'expansion de polymères selon la revendication 3, dans laquelle ledit hydrofluorocarbure est choisi dans le groupe constitué par le difluorométhane (HFC32), le 1,1,1-trifluoroéthane (HFC143a), le 1,1,1,2,2-pentafluoroéthane (HFC125), le 1,1,2,2-tétrafluoroéthane (HFC134), le 1,1,1,2-tétrafluoroéthane (HFC134a), le 1,1-difluoroéthane (HFC152a), le 1,1,1,2,3,3,3-heptafluoropropane (HFC227ea), le 1,1,1,3,3-pentafluoropropane (HFC245fa), le 1,1,1,3,3-pentafluorobutane (HFC365mfc) et le 1,1,1,2,2,3,4,5,5,5-décafluoropentane (HFC4310mee).

5. Composition d'agent d'expansion de polymères selon la revendication 1, comprenant en outre une hydrofluorooléfine.

6. Composition d'agent d'expansion de polymères selon la revendication 5 dans laquelle ladite hydrofluorooléfine est choisie dans le groupe constitué par les tétrafluoropropènes (HFO1234), les isomères du tétrafluorobutène (HFO1354), les isomères du pentafluorobutène (HFO1345), les isomères de l'hexafluorobutène (HFO1336), les isomères de l'heptafluorobutène (HFO1327), les isomères de l'heptafluoropentène (HFO1447), les isomères de l'octafluoropentène (HFO1438), le nonafluoropentène (HF01429).

7. Composition d'agent d'expansion de polymères selon la revendication 1, comprenant en outre un constituant choisi dans le groupe constitué par une deuxième hydrofluorooléfine (HFO), un hydrofluorocarbure, un hydrocarbure, un alcool, un aldéhyde, un ester, un éther/diéther de cétone ou du dioxyde de carbone.

8. Procédé de moussage d'une mousse de polyuréthane comprenant le fait de mélanger les constituants de la mousse de polymère avec un agent d'expansion de mousse comprenant l'hydrofluoropropène HFO-1243zf en combinaison avec une hydrochlorofluorooléfine (HCFO) choisie dans le groupe constitué par HCFO-1233zd, HCFO-1233xf, HCFO-1223 et leurs mélanges.

9. Procédé selon la revendication 8 dans lequel ledit hydrofluoropropène HFO-1243zf constitue 5 % en poids ou plus de la composition d'hydrofluoropropène et d'hydrochlorofluorooléfine.

10. Procédé selon la revendication 8, dans lequel ledit agent d'expansion de mousse comprend en outre un hydrofluorocarbure.

11. Procédé selon la revendication 10 dans lequel ledit hydrofluorocarbure est choisi dans le groupe constitué par le difluorométhane (HFC32), le 1,1,1,2,2-pentafluoroéthane (HFC125), le 1,1,1-trifluoroéthane (HFC143a), le 1,1,2,2-tétrafluoroéthane (HFC134), le 1,1,1,2-tétrafluoroéthane (HFC134a), le 1,1-difluoroéthane (HFC152a), le 1,1,1,2,3,3,3-heptafluoropropane (HFC227ea), le 1,1,1,3,3-pentafluoropropane (HFC245fa), le 1,1,1,3,3-pentafluorobutane (HFC365mfc) et le 1,1,1,2,2,3,4,5,5,5-décafluoropentane (HFC4310mee).

12. Procédé selon la revendication 8, dans lequel ledit agent d'expansion de mousse comprend en outre une hydrofluorooléfine.

13. Procédé selon la revendication 12 dans lequel ladite hydrofluorooléfine est choisie dans le groupe constitué par les 1,1,1,2-tétrafluoropropènes (HFO1234), les isomères du tétrafluorobutène (HFO1354), les isomères du pentafluorobutène (HFO1345), les isomères de l'hexafluorobutène (HFO1336), les isomères de l'heptafluorobutène (HFO1327), les isomères de l'heptafluoropentène (HFO1447), les isomères de l'octafluoropentène (HFO 1438) et le nonafluoropentène (HFO 1429).

14. Procédé selon la revendication 8 dans lequel ledit agent d'expansion comprend en outre un constituant choisi dans le groupe constitué par une deuxième hydrofluorooléfine (HFO), un hydrofluorocarbure, un hydrocarbure, un alcool, un aldéhyde, un ester, un éther/diéther de cétone ou du dioxyde de carbone.
